(19) Europäisches Patentamt
European Patent Office
Office européen des brevets

(11) EP 2 034 549 B1

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(51) Int Cl.:
***B01D 53/00*** *(2006.01)* ***H01M 8/06*** *(2006.01)*

(21) Anmeldenummer: **08015428.9**

(22) Anmeldetag: **01.09.2008**

(54) **Brennstoffzellenanlage mit Reformer**

Fuel cell device with reformer

Installation de pile à combustible avec réformateur

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.09.2007 AT 13982007**

(43) Veröffentlichungstag der Anmeldung:
**11.03.2009 Patentblatt 2009/11**

(73) Patentinhaber: **Vaillant GmbH**
**42859 Remscheid (DE)**

(72) Erfinder: **Badenhop, Thomas**
**51688 Wipperfürth (DE)**

(74) Vertreter: **Hocker, Thomas**
**Vaillant GmbH**
**Berghauser Strasse 40**
**42859 Remscheid (DE)**

(56) Entgegenhaltungen:
**WO-A1-2007/148699 US-A1- 2004 013 917**

EP 2 034 549 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung bezieht sich auf eine Brennstoffzellenanlage mit Reformer.

In Brennstoffzellen findet eine elektrochemische Reaktion statt. Hierbei reagiert Wasserstoff mit Sauerstoff zu Wasserdampf, wobei elektrische und thermische Nutzenergie entsteht.

Wasserstoff ist ein Sekundärenergieträger. Er kann in Reformern gewonnen werden. Hierbei reagieren Kohlenwasserstoffe $C_nH_m$ in Anwesenheit von Katalysatoren mit Luftsauerstoff $O_2$ und / oder Wasserdampf $H_2O$ zu Kohlendioxyd $CO_2$ und molekularem Wasserstoff $H_2$.

Erdgas wird in öffentlichen Versorgungssystemen ein Odorierungsmittel zugesetzt, damit Leckagen am Auftreten des Geruchs des Odorierungsmittels erkannt werden können. Als Odorierungsmittel wird häufig Tetrahydrothiophen (THT, $C_3H_8S$) beigefügt. Weitere Odorierungsmittel sind Isopropylmercaptan, Tertiärbutylmercaptan, Ethylmercaptan und sowie Di-Methyl-Sulfid (DMS). Darüber hinaus enthält Erdgas als natürliche schwefelhaltige Begleitstoffe in geringen Konzentrationen Schwefelwasserstoff, Kohlenstoffoxidsulfid, Schwefelkohlenstoff und Mercaptane sowie Di-Methyl-Sulfid.

Sowohl Brennstoffzellen, als auch Reformer enthalten Katalysatoren, welche durch Schwefelverbindungen irreversibel vergiftet werden.

Der Erfindung liegt die Aufgabe zugrunde, eine Brennstoffzellenanlage sowie ein Verfahren zum Betreiben dieser Brennstoffzellenanlage zu schaffen, bei dem eine Schwefelvergiftung der Brennstoffzelle vermieden wird.

Erfindungsgemäß wird dies gemäß den Merkmalen des unabhängigen Vorrichtungsanspruchs 1 dadurch erreicht, dass bei einer Brennstoffzellenanlage mit einer Brennstoffzelle und einem Reformer das Erdgas durch eine erste Entschwefelungspatrone geleitet wird und ein Teilstrom des entschwefelten Erdgases in einem Reformerbrenner oder Nachbrenner verbrannt wird. Ein in der Abgasleitung angeordneter Schwefeldioxidsensor erkennt, ob Schwefelverbindungen die erste Entschwefelungspatrone passiert haben und im Brenner zu Schwefeldioxid umgewandelt wurden.

Vorteilhafte Ausgestaltungen ergeben sich durch die Merkmale der abhängigen Ansprüche.

Gemäß den Merkmalen des abhängigen Verfahrensanspruchs 4 wird in dem Falle, in dem ein Schwefeldurchbruch erkannt wird, ein Warnhinweis ausgegeben und/oder die Brennstoffzellenanlage abgeschaltet. Hierdurch wird eine Beschädigung der Brennstoffzelle vermieden.

Die Erfindung wird nun anhand der Figuren detailliert erläutert, wobei gleiche Bezugszeichen sich auf gleiche Bauteile beziehen. Hierbei zeigen:

Figur 1 eine erfindungsgemäße Brennstoffzellenanlage mit Dampfreformer,

Figur 2 eine erfindungsgemäße Brennstoffzellenanlage mit partieller Oxidation und

Figur 3 eine erfindungsgemäße Brennstoffzellenanlage mit autothermer Dampfreformer.

Figur 1 zeigt eine Brennstoffzellenanlage mit einer Brennstoffzelle 1, der ein Reformer 2 zum Reformieren von Erdgas in ein wasserstoffreiches Prozessgas vorgelagert ist. Die Brennstoffzelle 1 verfügt über einen Kathode 10 und eine Anode 11. Der Reformer 2 verfügt über einen Reformerbrenner 6 zum Beheizen des Reformers 2. Eine Erdgaszuleitung 4, in der sich ein Durchflussmengenzähler 14 befindet, führt zu einer ersten Entschwefelungspatrone 3, von dieser führt eine Ausgangsleitung einerseits zu dem Reformerbrenner 6 und andererseits über eine zweite Entschwefelungspatrone 9 zum Reformer 2. In den Reformer 2 führt darüber hinaus eine Wasserleitung 19. Alternativ kann auch Wasserdampf zugeführt werden. Der Ausgang des Reformers 2 ist mit der Anode 11 der Brennstoffzelle 1 verbunden. Der Ausgang der Anode 11 ist über eine Anodenabgasleitung 17 mit dem Reformerbrenner 6 verbunden. In den Reformerbrenner 6 führt weiterhin eine Luftzuführleitung 18. Aus dem Reformerbrenner 6 führt eine Abgasleitung 7, in der sich ein Abgaswärmetauscher 12 befindet. Stromab des Abgaswärmetauschers 12 befindet sich ein Schwefeldioxidsensor 8, der mit einer Auswerteelektronik 13 verbunden ist. In die Kathode 10 der Brennstoffzelle 1 führt eine Luftzuführleitung 15; aus der Kathode 10 führt eine Kathodenabluftleitung 16 in die Umgebung.

Beim Betrieb der Brennstoffzellenanlage wird Erdgas über den Durchflussmengenzähler 14 in die ersten Entschwefelungspatrone 3 geleitet. Dort wird der im Erdgas befindliche Schwefel gebunden, so dass - sofern die ersten Entschwefelungspatrone 3 nicht gesättigt ist - schwefelfreies Erdgas die ersten Entschwefelungspatrone 3 verlässt. Ein Teil des entschwefelten Erdgases wird dem Reformerbrenner 6 zugeführt und zusammen mit Luft aus der Luftzuführleitung 18 und brennbarem Anodenabgas aus der Anodenabgasleitung 17 verbrannt. Die freiwerdende Wärme dient zur Beheizung des Reformers 2. Das Abgas des Reformerbrenners 6 wird im Abgaswärmetauschers 12 abgekühlt, die Wärme dabei zu Heizzwecken genutzt, und dann abgeführt, wobei das abgekühlte Abgas den Schwefeldioxidsensor 8 passiert. Das Signal des Schwefeldioxidsensors 8 wird an die Auswerteelektronik 13 weitergegeben.

Der Teil des entschwefelten Erdgases, der nicht dem Reformerbrenner 6 zugeführt wird, gelangt über die zweite Entschwefelungspatrone 9 zum Reformer 2. Die zweite Entschwefelungspatrone 9 hat die Aufgabe, bei einem

Durchbruch der ersten Entschwefelungspatrone 3 Schwefel vom Reformer 2 fern zu halten. Der Reformer 2 gemäß Figur 1 arbeitet endotherm als Dampfreformer. Deshalb wird ihm neben entschwefeltem Erdgas über die Wasserleitung 19 Wasser oder Wasserdampf zugeführt. Dem Reformierprozess wird vom Reformererbrenner 6 die benötige Wärme zugeführt. Im Reformer findet folgende Reaktion statt:

$$CH_4 + H_2O \overset{+207\frac{kJ}{mol}}{\rightarrow} CO + 3H_2$$

In einem weiteren Reformierungsschritt wird das Kohlenmonoxyd CO mit weiterem Wasserdampf $H_2O$ zu Kohlendioxyd $CO_2$ und Wasserstoff $H_2$ weiterverarbeitet

$$CO + H_2O \overset{-41\frac{kJ}{mol}}{\rightarrow} CO_2 + H_2$$

Bei Hochtemperaturbrennstoffzellen kann auf diesen Schritt verzichtet werden, da diese Brennstoffzellen auch Kohlenmonoxid umsetzen können.

Das wasserstoffreiche Prozessgas wird vom Reformer 2 zur Anode 11 der Brennstoffzelle 1 geleitet. Gleichzeitig wird Luft über die Luftzuführleitung 15 zur Kathode 10 der Brennstoffzelle 1 geführt. In der Brennstoffzelle 1 findet die elektrochemische Reaktion statt. Auf der Anodenseite findet dabei eine anodische Teilreaktion (Oxydation) statt.

$$2H_2 \rightarrow 4H^+ + 4e^-$$

Die Protonen $H^+$ gelangen durch eine Elektrolytmembran von der Anode 11 zur Kathode 10, an welcher eine kathodische Teilreaktion (Reduktion) stattfindet

$$O_2 + 4e^- \rightarrow 2O^{2-}$$

$$4H^+ + 2O^{2-} \rightarrow 2H_2O$$

Hierbei wandern die korrespondierenden Elektronen über einen nicht dargestellten elektrischen Verbraucher. Die Kathodenabluft wird über die Kathodenabluftleitung 16 in die Umgebung geleitet, während das Anodenabgas - wie zuvor beschrieben - im Reformerbrenner 6 genutzt wird.

Wird im Abgas des Reformerbrenners 6 eine Schwefeldioxidemission oberhalb eines festgelegten Schwellwertes, der wenig größer als null und ebenfalls größer als die Konzentration in der Umgebungsluft ist, detektiert, so muss Schwefel die erste Entschwefelungspatrone 3 passiert haben. Die Auswerteelektronik 13 gibt daher bei Bedarf eine Warnung aus und benachrichtigt optional den Fachhandwerker über eine Datenfernleitung, damit dieser die erste Entschwefelungspatrone 3 austauschen kann und danach wieder ein schwefelfreier Betrieb der Brennstoffzellenanlage möglich ist.

Da bei einem Durchbruch der ersten Entschwefelungspatrone 3 die zweite Entschwefelungspatrone 9 Schwefel vor dem Eintritt in den Reformer abfängt, kann die Brennstoffzellenanlage noch weiter betrieben werden. Eine sofortige Abschaltung der Anlage ist daher nicht zwingend notwendig; ein baldiger Austausch jedoch zu empfehlen.

Eine Vorrichtung gemäß Figur 2 unterscheidet sich von einer Vorrichtung gemäß Figur 1 hauptsächlich dadurch, dass in dem Reformer 2 eine exotherme, partielle Oxidation gemäß der Formel

$$CH_4 + O_2 \overset{-319\frac{kJ}{mol}}{\rightarrow} CO_2 + 2H_2$$

stattfindet. Dem Reformer 2 wird dementsprechend Luft über eine Luftzuführleitung 15 anstelle von Wasser zugeführt. Das Anodenabgas wird einem Nachbrenner 5 anstelle eines Reformerbrenners zugeführt. Der Nachbrenner 5 enthält ebenfalls Erdgas, das die erste Entschwefelungspatrone 3 passiert hat.

Erfindungsgemäß wird im Fall eines Schwefeldurchbruchs durch die erste Entschwefelungspatrone 3 Schwefeldioxid in der Abgasleitung des Nachbrenners 5 detektiert.

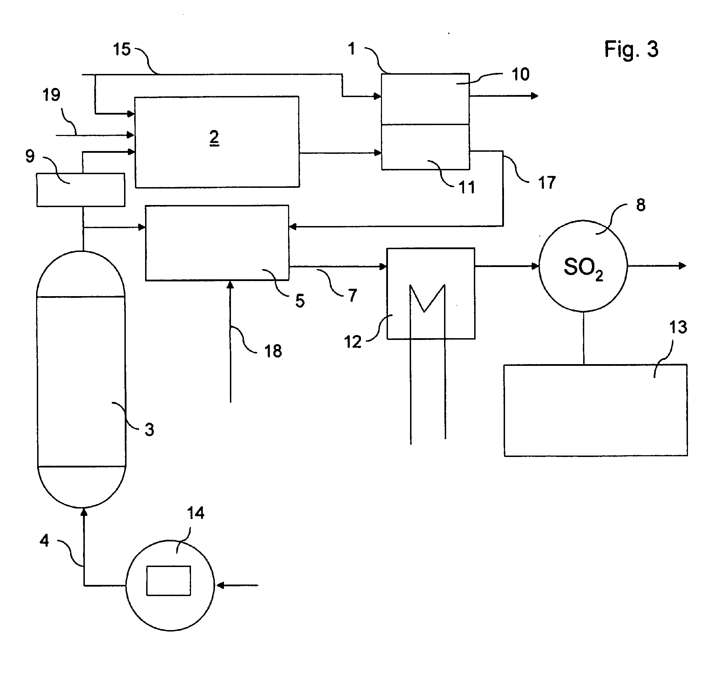

Bei der Vorrichtung gemäß Figur 3 findet im Reformer 2 eine autotherme Dampfreformierung statt. Hierbei finden beide oben genannten Reformerreaktionen statt, so dass die freiwerdende Energie der exothermen Reaktion genutzt wird, um die endotherme Reaktion am Laufen zu halten. Die entstehende Reaktionstemperatur kann deshalb ohne die Zufuhr beziehungsweise Abfuhr großer Wärmemengen auf einem bestimmten Niveau gehalten werden. Dem Reformer 2 werden gleichzeitig Luft und Wasser zugeführt.

Bei der Brennstoffzelle 1 kann es sich um eine Festoxidbrennstoffzelle handeln. Festoxidbrennstoffzellen arbeiten zumeist bei Temperaturen um 800°C bei hohem Luftüberschuss ($\lambda > 2$). Bei etwa 800°C läuft an der Anode die Reaktion $O^{2-} + H_2 \rightarrow H_2O + 2e^-$ und an der Kathode die Reaktion $\frac{1}{2}O_2 + 2e^- \rightarrow 2O^{2-}$ **ab.** SOFC-Festoxidbrennstoffzellen haben den Vorteil, dass auch Kohlenmonoxid in der Brennstoffzelle umgesetzt werden kann.

Bei Karbonatschmelzen-Brennstoffzellen (Molten Carbonate Fuel Cell) findet bei etwa 650°C die Reaktion $H_2 + CO_3^{2-} \rightarrow H_2O + CO_2 + 2e^-$ an der Anode und $CO_2 + \frac{1}{2}O_2 + 2e^- \rightarrow CO_3^{2-}$ an der Kathode statt.

Erfindungsgemäß ist die Kombination verschiedener dargestellter Varianten (Art der Reformierung, Typ der Brennstoffzelle, Brennertyp) möglich. Statt Erdgas kann auch ein anderes Brenngas oder ein flüssiger Brennstoff reformiert werden.

## Patentansprüche

1. Brennstoffzellenanlage mit mindestens einer Brennstoffzelle (1) und einem ein- oder mehrstufigen Reformer (2) zum Umwandeln von Erdgas oder eines anderen schwefelhaltigen, kohlenwasserstoffhaltigen Brennstoffs in ein molekularen Wasserstoff führendes Prozessgas und mindestens einer ersten Entschwefelungspatrone (3) in der Erdgaszuleitung (4) stromauf des Reformers (2), **dadurch gekennzeichnet, dass** stromab der ersten Entschwefelungspatrone (3) ein Teilstrom des Erdgas- oder sonstigen kohlenwasserstoffhaltigen Brennstoffstroms zu einem Nachbrenner (5) oder Reformerbrenner (6) geführt wird und im Abgasstrom des Nachbrenners (5) oder Reformerbrenners (6) ein Schwefeldioxidsensor (8) angeordnet ist.

2. Brennstoffzellenanlage nach Anspruch 1, **dadurch gekennzeichnet, dass** zwischen der der ersten Entschwefelungspatrone (3) und dem Reformer (2) eine zweite Entschwefelungspatrone (9) angeordnet ist.

3. Brennstoffzellenanlage nach Anspruch 1 oder 2, **dadurch gekennzeichnet, dass** dem Nachbrenner (5) oder Reformerbrenner (6) zusätzlich brennstoffhaltiges Abgas der Brennstoffzelle (1) zugeführt wird.

4. Verfahren zum Betreiben einer Brennstoffzellenanlage nach einem der Ansprüche 1 bis 3, **dadurch gekennzeichnet, dass** ein Warnsignal ausgegeben wird, wenn die mittels Schwefeldioxidsensor (8) gemessene Schwefeldioxidemission einen vorgegebenen Schwellwert überschreitet und / oder die Brennstoffzellenanlage vorzugsweise nach Ablauf einer vorbestimmten Zeit heruntergefahren wird.

5. Verfahren zum Betreiben einer Brennstoffzellenanlage nach Anspruch 4, **dadurch gekennzeichnet, dass** das Warnsignal und / oder die Information, dass die Brennstoffzellenanlage heruntergefahren wird, mittels Datenfernübertragung weitergeleitet wird.

## Claims

1. Fuel cell system having at least one fuel cell (1) and at least one single-stage or multistage reformer (2) for converting natural gas or another sulphurous, hydrocarbon fuel into a process gas containing molecular hydrogen, and having at least a first desulphurisation cartridge (3) in the natural gas feed line (4) upstream of the reformer (2), **characterised in that**, downstream of the first desulphurisation cartridge (3), a natural gas or other hydrocarbon fuel flow is guided

to a reheater (5) or reformer burner (6) and a sulphur dioxide sensor (8) is arranged in the waste gas flow of the reheater (5) or reformer burner (6).

2. Fuel cell system according to claim 1, **characterised in that** a second desulphurisation cartridge (9) is arranged between the first desulphurisation cartridge (3) and the reformer (2).

3. Fuel cell system according to claim 1 or 2, **characterised in that** fuel-containing waste gas of the fuel cell (1) is additionally fed to the reheater (5) or reformer burner (6).

4. Method for operating a fuel cell system according to one of claims 1 to 3, **characterised in that** a warning signal is emitted when the sulphur dioxide emission measured by means of the sulphur dioxide sensor (8) exceeds a predefined threshold value and/or the fuel cell system is preferably shut down once a predetermined time has elapsed.

5. Method for operating a fuel cell system according to claim 4, **characterised in that** the warning signal and/or the information that the fuel cell system will be shut down is passed on by means of remote data transmission.

## Revendications

1. Système de pile à combustible comprenant au moins une pile à combustible (1) et au moins un reformeur à étape unique ou à étapes multiples (2) pour la conversion de gaz naturel ou d'un autre combustible hydrocarboné, sulfureux en un gaz de procédé contenant de l'hydrogène moléculaire, et comprenant au moins une première cartouche de désulfurisation (3) dans la conduite d'alimentation en gaz naturel (4) en amont du reformeur (2), **caractérisé en ce que**, en aval de la première cartouche de désulfurisation (3), un débit de gaz naturel ou autre combustible hydrocarboné est guidé dans un resurchauffeur (5) ou un brûleur pour reformeur (6) et un capteur de dioxyde de soufre (8) est agencé dans le débit de gaz de combustion du resurchauffeur (5) ou du brûleur pour reformeur (6).

2. Système de pile à combustible selon la revendication 1, **caractérisé en ce que** une deuxième cartouche de désulfurisation (9) est agencée entre la première cartouche de désulfurisation (3) et le reformeur (2).

3. Système de pile à combustible selon la revendication 1 ou 2, **caractérisé en ce que** le gaz de combustion de la pile à combustible (1) contenant le combustible alimente en outre le resurchauffeur (5) ou le brûleur pour reformeur (6).

4. Méthode de fonctionnement d'un système de pile à combustible selon l'une des revendications 1 à 3, **caractérisée en ce qu'**un signal d'alarme est émis lorsque l'émission de dioxyde de soufre mesurée au moyen d'un capteur à dioxyde de soufre (8) dépasse une valeur seuil prédéfinie et/ou le système de pile à combustible est de préférence fermé une fois que le temps prédéterminé s'est écoulé.

5. Méthode de fonctionnement d'un système de pile à combustible selon la revendication 4, **caractérisée en ce que** le signal d'alarme et/ou les informations de fermeture du système de pile à combustible sont transmis au moyen d'une transmission à distance des données.

Fig. 1

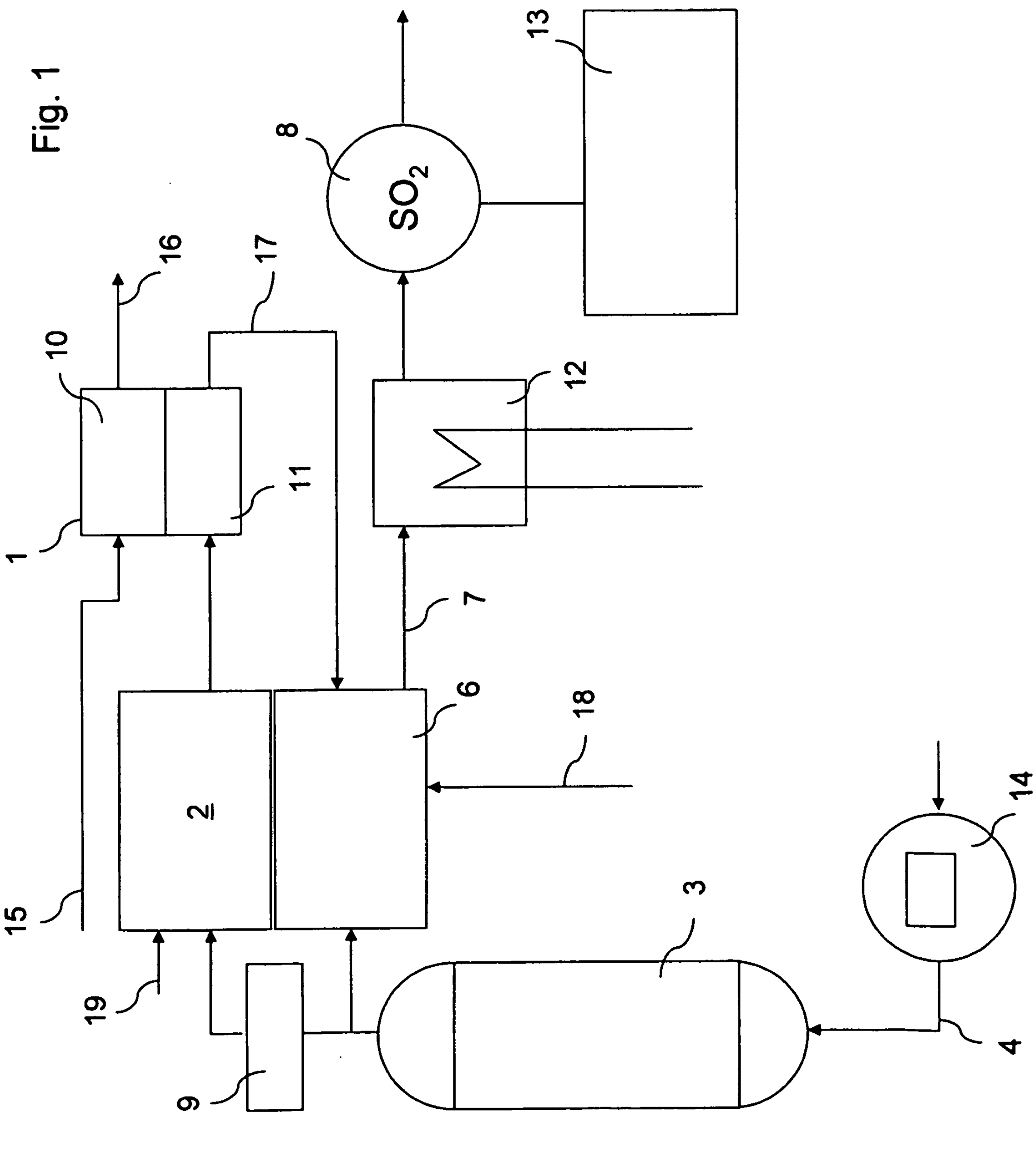

Fig. 2

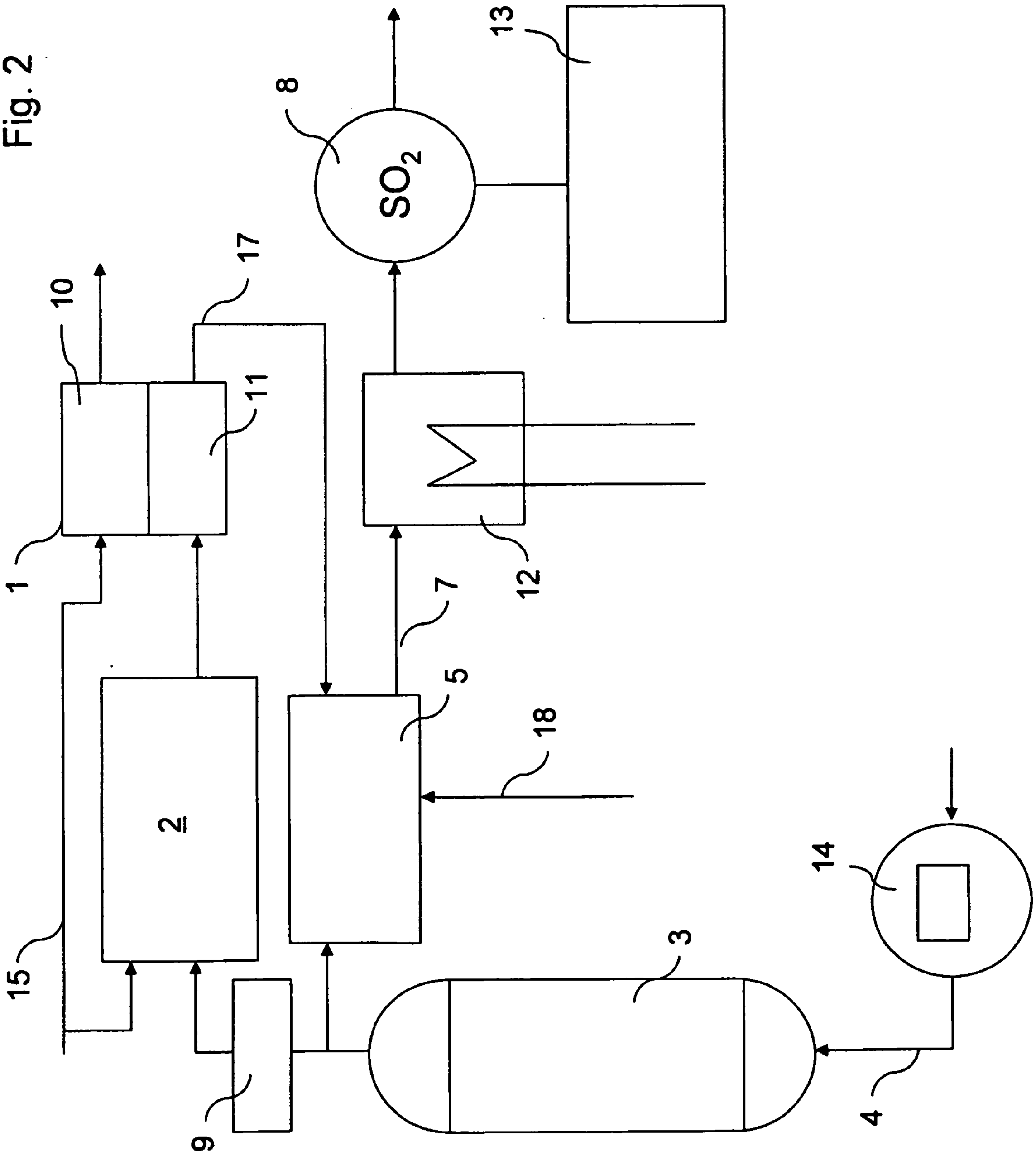

Fig. 3